# EUROPEAN PATENT APPLICATION

(11) **EP 4 129 074 A1**
(43) Date of publication of application: **08.02.2023**
(21) Application number: 21780693.4
(22) Date of filing: 30.03.2021
(51) Int. Cl.: A23C 21/02, A23C 21/10, A23L 2/52, A23L 2/38

(54) **FERMENTATION COMPOSITION, METHOD FOR PRODUCING FERMENTATION COMPOSITION, AND VIABILITY IMPROVING AGENT**

(30) Priority: 30.03.2020 JP 2020059790
(71) Applicant: Morinaga Milk Industry Co., Ltd., Minato-ku Tokyo 108-8384 (JP)
(72) Inventor: HATTORI, Tatsuya, Zama-shi, Kanagawa 252-8583 (JP); TOMITA, Shin, Zama-shi, Kanagawa 252-8583 (JP); MIYAUCHI, Hirofumi, Zama-shi, Kanagawa 252-8583 (JP)
(74) Representative: Hoffmann Eitle
(86) International application number: PCT/JP2021/013464
(87) International publication number: WO 2021/200900

(57) **Abstract**

A fermentation composition which contains (A) whey protein, (B) bacteria of the genus *Bifidobacterium* and (C) 0.05 mass% or more of an ash content and which can suppress a decrease in the viable bacterial count of the bacteria of the genus *Bifidobacterium* is provided.

## Description

### Technical Field

The present invention relates to a fermentation composition, a method for producing a fermentation composition and a viability-improving agent.

The present application claims priority to patent application No. 2020-059790 filed on March 30, 2020 in Japan, and the contents thereof are incorporated here by reference.

### Background Art

Whey, which is a byproduct of cheese production, contains amino acids, proteins, vitamins and the like and has a high nutritional value. Recently, fermented products produced from whey-derived whey protein as a raw material have been provided.

PTL 1 examines a technique aiming at providing a low-viscosity fermented whey drink which has excellent stability (prevention of precipitation) and an excellent texture without using hydrocolloids such as pectin, which are conventional stabilizers. In PTL 1, a fermented whey drink characterized by containing lactoferrin as an anti-precipitation agent is provided.

PTL 2 examines a technique aiming at providing a fermented whey preparation which has both a fermentation-derived unique and excellent flavor and a clean and refreshing flavor and which further has a smooth texture on the tongue and further has excellent thermal stability and excellent safety. In PTL 2, a fermented whey preparation which is obtained through high-temperature sterilization of an aqueous solution containing sweet whey powder, subsequent lactic acid fermentation with a lactic acid bacterium starter (a mixture culture of *Lactobacillus bulgaricus* JCM 1002^{T} and *Streptococcus thermophilus* ATCC 19258) and homogenization of the obtained fermented liquid is provided.

### Citation List

### Patent Literature

PTL 1: JP-A-2009-225719
PTL 2: WO2008/136309

### Summary of Invention

### Technical Problem

The present inventors have found that coexistence of whey protein and the bacteria of the genus *Bifidobacterium* in a fermentation composition obtained by fermenting whey protein significantly decreases the viable bacterial count of the bacteria of the genus *Bifidobacterium* after the production and also decreases the viability, resulting in a decrease in the survival.

The bacteria of the genus *Bifidobacterium* are considered as promising probiotics having intestinal regulation effect, immune-enhancing effect and the like. However, it is not easy to maintain the viable bacterial count of the bacteria of the genus *Bifidobacterium* in a fermentation composition after the production and to increase the viability.

An object of the invention is to provide a fermentation composition which contains whey protein and the bacteria of the genus *Bifidobacterium* and which can suppress a decrease in the viable bacterial count of the bacteria of the genus *Bifidobacterium.*

### Solution to Problem

As a result of extensive research, the present inventors have found that blending of an ash content (preferably an alkali metal) in a fermentation composition containing whey protein and the bacteria of the genus *Bifidobacterium* can suppress a decrease in the viable bacterial count of the bacteria of the genus *Bifidobacterium* and can improve the viability and thus have completed the invention.

That is, the invention is as follows.

The invention provides a fermentation composition containing the components (A) to (C) below.
(A) Whey protein
(B) bacteria of the genus *Bifidobacterium*
(C) 0.05 mass% or more of an ash content

The invention also provides a method for producing a fermentation composition containing the components (A) to (C) below including a step of blending the component (C) ash content.
(A) Whey protein
(B) bacteria of the genus *Bifidobacterium*
(C) An ash content

The invention also provides a viability-improving agent for improving the viability of a bacteria of the genus *Bifidobacterium* contained in a fermentation composition containing whey protein and the bacteria of the genus *Bifidobacterium* in which the survival-improving agent contains an ash content as an active ingredient.

The (C) ash content may be an ash content containing at least an alkali metal.

The sodium and potassium content of 100 g of the fermentation composition may be at least 15 mg or more.

The amount of the (A) whey protein may be 1 mass% or more.

The fermentation composition may contain one or both of a whey protein concentrate and a whey protein isolate.

The solid concentration of the fermentation composition may be less than 11 mass% based on the total mass of the fermentation composition.

The viable bacterial count of the (B) the bacteria of the genus *Bifidobacterium* in the fermentation composition may be 1×10⁶ CFU/g or more.

The fermentation composition may be a chilled food or drink.

### Advantageous Effects of Invention

According to the invention, a fermentation composition which contains whey protein and the bacteria of the genus *Bifidobacterium* and which can suppress a decrease in the viable bacterial count of the bacteria of the genus *Bifidobacterium* can be provided.

The effect described here is not necessarily limited and may be any of the effects described in the present specification.

### Description of Embodiments

Embodiments for carrying out the invention are explained below. The embodiments explained below are examples of typical embodiments of the invention, and the scope of the invention is not construed as being narrower due to the embodiments. In the present specification, a percentage is a percentage by mass unless otherwise specified. Moreover, the upper limits and the lower limits of numerical ranges (to) can be freely combined according to the desire.

### 1. Fermentation Composition

The invention provides a fermentation composition containing (A) whey protein, (B) bacteria of the genus *Bifidobacterium* and (C) an ash content (sometimes simply called "the fermentation composition of the invention" below). The (C) ash content of the fermentation composition of the invention is 0.05 mass% or more based on the total mass of the fermentation composition. The (A) whey protein content of the fermentation composition of the invention is preferably 1 mass% or more based on the total mass of the fermentation composition.

The fermentation composition of the invention is preferably a fermentation composition obtained by mixing and fermenting the (A), (B) and (C). The invention is preferably obtained by fermenting a raw fermentation material composition containing at least whey protein using a lactic acid bacterium and the bacteria of the genus *Bifidobacterium.*

In the invention, a low-fat and/or high-protein fermentation composition can be provided using whey protein. Moreover, in the invention, a fermentation composition having a high viable bacterial count and/or high viability of the bacteria of the genus *Bifidobacterium* can be provided using an ash content. Moreover, in the invention, because a decrease in the viable bacterial count of the bacteria of the genus *Bifidobacterium* can be suppressed and because the viability improves, a probiotic effect can also be expected.

### <1-1. (A) Whey Protein>

The fermentation composition of the invention contains whey protein. The whey protein content of the fermentation composition of the invention is preferably 1 mass% or more based on the total mass of the fermentation composition of the invention.

As the whey protein, whey protein derived from mammalian milk (for example, cow's milk, goat's milk, sheep's milk or mare milk) can be mainly used. The whey protein is preferably cow's milk-derived whey protein.

The whey protein used for the invention is not particularly limited, but for example, a raw material containing whey protein such as whey powder, a whey protein concentrate (WPC), a whey protein isolate (WPI), skim milk powder, a milk protein concentrate (MPC or TMP) and a micellar casein concentrate (MCC) can be used. The raw materials containing whey protein may be commercial raw materials. The whey protein content of the raw material containing whey protein, based on the total mass of the raw material, is generally around 30 to 85 mass% in the case of WPC, around 85 to 95 mass% in the case of WPI, around 15 to 17 mass% in the case of TMP or around 11 to 15 mass% in the case of whey powder. Of these, one or both of whey protein kinds having a high protein content (specifically, a whey protein concentrate (WPC) and a whey protein isolate (WPI)) are preferable.

As the whey protein used for the invention, one, two or more kinds selected from the group consisting thereof can be used.

The whey powder can be obtained by a known production method but can be produced, for example, by drying whey, which is a byproduct of the production step of cheese or casein. In addition, the sweet whey powder, the desalted whey powder and the skim milk powder described above can be obtained by a known production method.

The whey protein concentrate (WPC) and the whey protein isolate (WPI) are obtained by a known whey protein concentration method or the like. For example, the whey protein concentrate (WPC) and the whey protein isolate (WPI) are obtained from whey, which is a byproduct of the production step of cheese or casein, as a raw material through concentration of whey protein while removing a part of lactose, minerals and the like.

Examples of the whey include cheese whey and acid whey.

The method for concentrating whey protein or the method for removing lactose and the like here is not particularly limited, and for example, a known protein concentration method or a known removal method such as desalting can be used. The concentration removal or the removal method is more specifically, for example, ion exchange or filtration (preferably ultrafiltration). As the concentration removal or the removal method, one, two or more kinds selected from the group consisting thereof can be used. Of these, ultrafiltration is preferable in view of the production efficiency.

The (A) whey protein content of the fermentation composition of the invention is not particularly limited. To make the fermentation composition low-fat and/or high-protein, the lower limit of the (A) whey protein content of the fermentation composition of the invention, based on the total mass of the fermentation composition, is preferably 0.5 mass% or more, more preferably 1.0 mass% or more, further preferably 1.1 mass% or more. Moreover, the upper limit of the (A) whey protein content of the fermentation composition of the invention, based on the total mass of the fermentation composition, is preferably 5.0 mass% or less, more preferably 3.0 mass% or less, further preferably 2.0 mass% or less, still further preferably 1.5 mass% or less. Furthermore, the range of the (A) whey protein content of the fermentation composition of the invention, based on the total mass of the fermentation composition, is more preferably 0.5 to 2.0 mass%, further preferably 1.0 to 1.5 mass%. When the (A) whey protein content of the fermentation composition of the invention is in the numerical range, a decrease in the viable bacterial count of the bacteria of the genus *Bifidobacterium* in the fermentation composition can be further suppressed, and the viability can be further improved.

### <1-2. (B) Bacteria of the genus Bifidobacterium>

The fermentation composition of the invention contains the bacteria of the genus.

The bacteria of the genus *Bifidobacterium* is not particularly limited, but examples thereof include *Bifidobacterium longum* subsp. *longum, Bifidobacterium longum* subsp. *infantis, Bifidobacterium breve* and *Bifidobacterium bifidum.*

The bacteria of the genus *Bifidobacterium* is preferably one, two or more species selected from the group consisting of *Bifidobacterium longum* subsp. *longum, Bifidobacterium longum* subsp. *infantis, Bifidobacterium* breve and *Bifidobacterium bifidum,* and because a decrease in the viable bacterial count of the bacteria of the genus *Bifidobacterium* in the fermentation composition of the invention can be further suppressed and because the viability can be further improved, one, two or more species selected from the group consisting of *Bifidobacterium longum* subsp. *longum* and *Bifidobacterium longum* subsp. *infantis* are more preferable. Because a decrease in the viable bacterial count can be suppressed by blending the component (C) ash content, *Bifidobacterium longum* subsp. *longum* is further preferable.

The amount of the (B) bacteria of the genus *Bifidobacterium* contained in the fermentation composition of the invention is not particularly limited but is preferably 1×10³ to 1×10¹² CFU/g (or cells/g), more preferably 1×10⁵ to 1×10¹¹ CFU/g (or cells/g), more preferably 1×10⁶ to 1×10¹¹ CFU/g (or cells/g), further preferably 1×10⁷ to 1×10¹⁰ CFU/g (or cells/g).

In the invention, the "CFU" is colony forming unit (cell number).

The cell number of the bacterium (CFU) can be measured by culturing an appropriately diluted suspension of the bacterium spread on a suitable agar medium, such as BCP-added plate count agar medium (manufactured by Eiken Chemical Co., Ltd.), and counting the number of appearing colonies.

The amount of the (B) bacteria of the genus *Bifidobacterium* contained is preferably the viable bacterial count because the invention can suppress a decrease in the viable bacterial count.

The viable bacterial count of the (B) bacteria of the genus *Bifidobacterium* is not particularly limited. The lower limit of the viable bacterial count of the (B) bacteria of the genus *Bifidobacterium* is preferably 1×10⁵ CFU/g or more, more preferably 0.5×10⁷ CFU/g or more, further preferably 1×10⁷ CFU/g or more, still further preferably 1.5×10⁷ CFU/g or more. The upper limit of the viable bacterial count of the (B) bacteria of the genus *Bifidobacterium* is not particularly limited but can be, for example, 1×10⁸ CFU/g or less or 0.5×10⁸ CFU/g or less.

The viable bacterial count of the (B) bacteria of the genus*Bifidobacterium* is preferably the viable bacterial count after storage for a certain period, more preferably "the viable bacterial count after cold (specifically 0 to 10°C) storage for two weeks or three weeks after obtaining the fermentation composition of the invention (after 0 day)", further preferably "the viable bacterial count after cold (specifically 0 to 10°C) storage for three weeks after obtaining the fermentation composition of the invention (after 0 day)".

The fermentation composition of the invention can suppress a decrease in the viable bacterial count of the bacteria of the genus *Bifidobacterium* and can improve the viability. Moreover, the fermentation composition of the invention can also maintain the viable bacterial count of the bacteria of the genus *Bifidobacterium* and the viability for a longer period.

The "viability (%)" in the invention can be calculated by "[viable bacterial count (CFU/g) after storage for certain period/viable bacterial count (CFU/g) soon after production (0h)]×100%".

The viability after storing the (B) bacteria of the genus *Bifidobacterium* for two weeks is not particularly limited. The lower limit of the viability after storing the (B) bacteria of the genus *Bifidobacterium* for two weeks is preferably 15% or more, more preferably 30% or more, further preferably 40% or more, still further preferably 50% or more, more preferably 60% or more. The upper limit of the viability after storing the (B) bacteria of the genus *Bifidobacterium* for two weeks is not particularly limited but can be, for example, 100% or less, 90% or less, 80% or less or 70% or less.

The viability after storing the (B) bacteria of the genus *Bifidobacterium* for three weeks is not particularly limited. The lower limit of the viability after storing the (B) bacteria of the genus *Bifidobacterium* for three weeks is preferably 5% or more, more preferably 10% or more, further preferably 20% or more, further preferably 25% or more, still further preferably 30% or more, more preferably 35% or more, further preferably 40% or more, more preferably 45% or more. The upper limit of the viability after storing the (B) bacteria of the genus *Bifidobacterium* for three weeks is not particularly restricted but can be, for example, 100% or less, 90% or less, 80% or less, 70% or less, 60% or less or 55% or less.

### <1-3. (C) Ash Content>

The fermentation composition of the invention contains an ash content. The kind of metal component contained in the ash content is not particularly limited.

Examples of the metal component include monovalent metals such as alkali metals including sodium or potassium, alkaline earth metals such as calcium and magnesium and polyvalent metals such as iron, zinc, copper and aluminum. One, two or more kinds of metal component selected from the group consisting thereof are preferably contained in the ash content.

The ash content used for the invention preferably contains an alkali metal because a decrease in the viable bacterial count of the bacteria of the genus *Bifidobacterium* can be suppressed and because the viability is improved. The alkali metal is not particularly limited, but examples thereof include sodium, potassium and lithium. As the alkali metal, one, two or more kinds selected from the group consisting thereof are preferably used. Of the alkali metals, use of one or both of sodium and potassium is more preferable, and combination use of sodium and potassium is further preferable. When the ash content contains one or both of sodium and potassium, a decrease in the viable bacterial count of the bacteria of the genus *Bifidobacterium* can be further suppressed, and the viability can be further improved.

The ash content used in the fermentation composition of the invention is not particularly limited, but examples thereof include lye, whey minerals and metal components. As the ash content, one, two or more kinds selected from the group consisting thereof are preferably used. Of these, one or both of a whey mineral and a metal component are preferably used. Using one or both of a whey mineral and a metal component, for example, the metal component content of the ash content contained in the fermentation composition of the invention can be adjusted, and the amount of a specific metal component contained in the fermentation composition of the invention can be adjusted.

As the ash content used in the fermentation composition of the invention, for example, one or both of mineral-concentrated whey and a metal component may be used. Moreover, as the ash content, a commercial product may be used, and an ash content obtained by a known production method may also be used. Examples of the known production method for producing a whey mineral include a method of removing proteins from whey as a byproduct, a lactose removal method through addition of lactose to whey and crystallization of lactose and the like, but the method is not limited thereto. Such removal methods can be conducted referring to the methods explained in <1-1. (A) Whey Protein>, and ultrafiltration is preferably used in view of the production efficiency.

The ash content used in the fermentation composition of the invention is preferably used in the form of a salt in view of the handling. Using a metal salt, the amount of the metal component can be adjusted according to the need.

Examples of the form of the salt are one, two or more kinds selected from the group consisting of a hydroxide, an oxide and a chloride, and a hydroxide or a chloride is preferable as the form of the salt in view of the easy handling.

When an alkali metal is used as the ash content in the fermentation composition of the invention, the form of an alkali metal salt is preferable. The form of the salt is not particularly limited, but a hydroxide or a chloride is more preferable in view of the handling.

The (C) ash content of the fermentation composition of the invention is not particularly limited as long as the content based on the total mass of the fermentation composition is 0.05 mass% or more. Because a decrease in the viable bacterial count of the bacteria of the genus *Bifidobacterium* can be suppressed and because the viability is improved further excellently, the lower limit of the (C) ash content of the fermentation composition of the invention, based on the total mass of the fermentation composition, is preferably 0.08 mass% or more, more preferably 0.10 mass% or more, further preferably 0.11 mass% or more. Moreover, the upper limit of the (C) ash content of the fermentation composition of the invention, based on the total mass of the fermentation composition, is preferably 0.9 mass% or less, more preferably 0.8 mass% or less, further preferably 0.7 mass% or less, still further preferably 0.6 mass% or less, more preferably 0.5 mass% or less, more preferably 0.41 mass% or less, further preferably 0.30 mass% or less, more preferably 0.25 mass% or less, more preferably 0.22 mass% or less, more preferably 0.20 mass% or less, more preferably 0.17 mass% or less, more preferably 0.14 mass% or less, more preferably 0.13 mass% or less. Furthermore, the range of the (C) ash content of the fermentation composition of the invention is more preferably 0.05 to 0.9 mass%, further preferably 0.08 to 0.7 mass%, still further preferably 0.11 to 0.41 mass%, more preferably 0.11 to 0.13 mass%.

The fermentation composition of the invention contains the (C) ash content and thus can suppress a decrease in the viable bacterial count of the bacteria of the genus *Bifidobacterium* caused by blending of the whey protein and can improve the viability.

The alkali metal (preferably the total amount of sodium and potassium) content of the fermentation composition of the invention is not particularly limited. The fermentation composition of the invention contains a certain amount of the alkali metal and thus can suppress a decrease in the viable bacterial count of the bacteria of the genus *Bifidobacterium* in the fermentation composition and can improve the viability. When sodium and potassium are used in combination, the amounts of the both can be appropriately adjusted so that a decrease in the viable bacterial count of the bacteria of the genus *Bifidobacterium* in the fermentation composition is further suppressed and that the viability is further improved.

Because a decrease in the viable bacterial count of the bacteria of the genus *Bifidobacterium* can be suppressed and because the viability is improved further excellently, the lower limit of the alkali metal content (more preferably the total amount of sodium and potassium) of 100 g of the fermentation composition is preferably 15 mg or more, more preferably 20 mg or more, further preferably 30 mg or more, more preferably 45 mg or more, further preferably 49 mg or more, more preferably 50 mg or more, more preferably 54 mg or more, more preferably 70 mg or more, more preferably 74 mg or more, more preferably 80 mg or more, more preferably 84 mg or more.

The upper limit of the alkali metal content (more preferably the total amount of sodium and potassium) of 100 g of the fermentation composition is preferably 400 mg or less, more preferably 380 mg or less, further preferably 304 mg or less, still further preferably 250 mg or less, more preferably 240 mg or less, more preferably 200 mg or less, more preferably 190 mg or less, more preferably 165 mg or less, more preferably 124 mg or less, more preferably 102 mg or less, more preferably 90 mg or less.

The range of the alkali metal content (more preferably the total amount of sodium and potassium) of 100 g of the fermentation composition is more preferably 20 to 400 mg, further preferably 49 to 250 mg, still further preferably 50 to 240 mg, more preferably 50 to 190 mg, more preferably 74 to 165 mg, more preferably 84 to 102 mg, more preferably 84 to 90 mg.

The sodium content of the fermentation composition of the invention is not particularly limited. The lower limit of the sodium content of the fermentation composition of the invention, in 100 g of the fermentation composition, is preferably 3 mg or more, more preferably 15 mg or more, further preferably 30 mg or more, still further preferably 35 mg or more, more preferably 60 mg or more. Moreover, the upper limit of the sodium content of the fermentation composition of the invention, in 100 g of the fermentation composition, is preferably 300 mg or less, more preferably 200 mg or less, further preferably 92 mg or less, still further preferably 80 mg or less. Furthermore, the range of the sodium content of the fermentation composition of the invention is more preferably 3 to 92 mg, further preferably 3 to 80 mg. As a result, a decrease in the viable bacterial count of the bacteria of the genus *Bifidobacterium* in the fermentation composition of the invention can be further suppressed, and the viability can be further improved.

The potassium content of the fermentation composition of the invention is not particularly limited. The lower limit of the potassium content of the fermentation composition of the invention, in 100 g of the fermentation composition, is preferably 5 mg or more, more preferably 10 mg or more, more preferably 30 mg or more, preferably 50 mg or more. Moreover, the upper limit of the potassium content of the fermentation composition of the invention is preferably 400 mg or less, more preferably 350 mg or less, further preferably 310 mg or less, still further preferably 200 mg or less, more preferably 170 mg or less, more preferably 161 mg or less, more preferably 120 mg or less, more preferably 100 mg or less, more preferably 80 mg or less. Furthermore, the range of the potassium content of the fermentation composition of the invention is more preferably 5 to 350 mg, further preferably 10 to 170 mg, more preferably 10 to 161 mg, further preferably 10 to 100 mg, more preferably 10 to 80 mg. As a result, a decrease in the viable bacterial count of the bacteria of the genus *Bifidobacterium* in the fermentation composition can be further suppressed, and the viability can be further improved.

The ratio (mass ratio) of the potassium content and the sodium content of the fermentation composition of the invention, K/Na (potassium content/sodium content), is not particularly limited but is preferably 0.01 to 120, more preferably 0.02 to 110, further preferably 0.03 to 105, still further preferably 0.04 to 100.3, more preferably 0.1 to 23. As a result, a decrease in the viable bacterial count of the bacteria of the genus *Bifidobacterium* in the fermentation composition of the invention can be further suppressed, and the viability can be further improved.

When the ratio of the potassium content and the sodium content of the fermentation composition of the invention, K/Na, is 1 or less (K/Na≤1), the K/Na is preferably 0.05 to 0.8, more preferably 0.06 to 0.71, more preferably 0.06 to 0.3, more preferably 0.06 to 0.28, more preferably 0.06 to 0.17, more preferably 0.09 to 0.17, more preferably 0.09 to 0.13.

When the ratio of the potassium content and the sodium content of the fermentation composition of the invention, K/Na, exceeds 1 (K/Na>1), the K/Na is preferably 10 to 70, more preferably 13.9 to 65.9, more preferably 13 to 45, more preferably 13.9 to 44.8, more preferably 20 to 30, more preferably 20 to 28.

The ratio (mass ratio) of the (C) ash content and the (A) whey protein content of the fermentation composition of the invention, (C)/(A) ((C) ash content/(A) whey protein content), is not particularly limited. The lower limit of the ratio of the (C) ash content and the (A) whey protein content of the fermentation composition of the invention, (C)/(A), is preferably 0.05 or more, more preferably 0.08 or more, more preferably 0.09 or more. Moreover, the upper limit of the ratio of the (C) ash content and the (A) whey protein content of the fermentation composition of the invention, (C)/(A), is preferably 1 or less, more preferably 0.7 or less, more preferably 0.6 or less, further preferably 0.5 or less, still further preferably 0.35 or less, more preferably 0.25 or less, more preferably 0.2 or less, more preferably 0.1 or less. The range of the ratio of the (C) ash content and the (A) whey protein content of the fermentation composition of the invention, (C)/(A), is preferably 0.05 to 1, more preferably 0.06 to 0.4, further preferably 0.07 to 0.25, still further preferably 0.08 to 0.2, more preferably 0.09 to 0.10. As a result, a decrease in the viable bacterial count of the bacteria of the genus *Bifidobacterium* in the fermentation composition of the invention can be further suppressed, and the viability can be further improved.

The ratio (mass ratio) of the total of sodium and potassium and the (A) whey protein content of the fermentation composition of the invention, Na+K/(A) (total Na and K content/(A) whey protein content), is not particularly limited but is preferably 0.04 to 0.4, more preferably 0.05 to 0.35, further preferably 0.06 to 0.30, still further preferably 0.07 to 0.13. As a result, a decrease in the viable bacterial count of the bacteria of the genus *Bifidobacterium* in the fermentation composition of the invention can be further suppressed, and the viability can be further improved.

The solid concentration of the fermentation composition of the invention is not particularly limited, and even with a low solid concentration, a high viable bacterial count and high viability can be maintained. In view of the viable bacterial count, the lower limit of the solid concentration of the fermentation composition of the invention, based on the total mass of the fermentation composition, is preferably 5 mass% or more, more preferably 6 mass% or more, further preferably 7 mass% or more, still further preferably 8 mass% or more, more preferably 9 mass% or more, and by making the solid concentration of the medium before fermentation high, the solid concentration of the fermentation composition can be made high. Moreover, the upper limit of the solid concentration of the fermentation composition of the invention, based on the total mass of the fermentation composition, is preferably 11 mass% or less, more preferably less than 11 mass%, further preferably 10 mass% or less. Furthermore, the range of the solid concentration of the fermentation composition of the invention, based on the total mass of the fermentation composition, is more preferably 5 to 10 mass%, further preferably 8 to 10 mass%. As a result, a decrease in the viable bacterial count of the bacteria of the genus *Bifidobacterium* in the fermentation composition of the invention can be further suppressed, and the viability can be further improved.

The milk fat content of the fermentation composition of the invention is not particularly limited, and even with a low milk fat content, a high viable bacterial count and high viability can be maintained. In view of the viable bacterial count, the lower limit of the milk fat content of the fermentation composition of the invention, based on the total mass of the fermentation composition, is preferably 0.005 mass% or more, more preferably 0.01 mass% or more, further preferably 0.05 mass% or more, and by making the milk fat content of the medium before fermentation high, the milk fat content of the fermentation composition can be made high. Moreover, the upper limit of the milk fat content of the fermentation composition of the invention, based on the total mass of the fermentation composition, is preferably 3.0 mass% or less, more preferably 2.0 mass% or less, further preferably 1.0 mass% or less, still further preferably 0.5 mass% or less, more preferably 0.1 mass% or less. The range of the milk fat content of the fermentation composition of the invention is more preferably 0.001 to 0.5 mass%, further preferably 0.05 to 0.1 mass%. In the invention, a fermentation composition in which a decrease in the viable bacterial count of the bacteria of the genus *Bifidobacterium* is further suppressed and which has higher viability and a lower milk fat content can be provided to a person who expects low-fat intake with a probiotic effect.

The mass ratio of the whey protein and the milk fat in the fermentation composition of the invention ([whey protein content/milk fat content]) is not particularly limited but is preferably 10 to 20, more preferably 13 to 18, further preferably 14 to 16. In the invention, a low-fat fermentation composition can be provided to a person who expects low-fat intake.

In this regard, in the invention, examples of the person who expects low-fat intake and the person who expects low-fat and high-protein intake include patients with obesity or lipid metabolism disorder, those with the risk thereof and those who expect muscle building (athletes, elderly people or the like).

The water content of the fermentation composition of the invention is not particularly limited but is, based on the total mass of the fermentation composition, preferably 20 to 95 mass%, more preferably 70 to 95 mass%, further preferably 80 to 93 mass%. In general, in a liquid or fluid composition having a high water content (for example, drinks or liquid foods), the viable bacterial count and the viability of the bacteria of the genus of *Bifidobacterium* tend to decrease more, but in the fermentation composition of the invention, decreases in the viable bacterial count and the viability of the bacteria of the genus of *Bifidobacterium* can be suppressed.

### <1-4. Optional Components>

Components can be blended in the fermentation composition of the invention as optional components within the range in which the effects of the invention are not impaired according to the need. Examples of the optional components include an acidic component, a milk component, a probiotic, a prebiotic, a sweetener, a stabilizer such as pectin, a flavor component, vegetable oil or fat, plant milk such as soy milk, a polysaccharide thickener, a flavor component, oil or fat, a protein, an amino acid, an organic acid, a vitamin and an inorganic salt. As the optional components, one, two or more kinds selected from the group consisting thereof can be used.

The acidic component is not particularly limited. Examples of the acidic component include citric acid, acetic acid, ascorbic acid, lactic acid, malic acid, maleic acid, adipic acid, succinic acid, fumaric acid, tartaric acid, gluconic acid, phytic acid, phosphoric acid, carbon dioxide and salts thereof. As the acidic component, one, two or more kinds selected from the group consisting thereof can be used.

The acidic component is used as an acidulant and/or a pH-adjusting agent, and the acidic component can add sourness to the fermentation composition of the invention or adjust the fermentation composition in the acidic range.

A material containing such an acidic component may also be used. For example, fruit juice of a citrus fruit may be used, and as a result, a flavor peculiar to fruit juice can also be added.

The milk component is not particularly limited, and a general milk component can be used. However, use of a milk component derived from cow's milk is preferable.

Examples of the milk component include, in addition to the raw materials of the whey protein, raw milk, cow's milk, concentrated milk, condensed milk, whole milk powder, cream and cream powder. As the milk component, one, two or more kinds selected from the group consisting thereof can be used. When a lower-fat and/or higher-protein fermentation composition is to be obtained as the fermentation composition of the invention, whey protein is preferably used.

As the probiotic, a bacterium other than the bacteria of the genus *Bifidobacterium* may be used. Examples of the bacterium other than the bacteria of the genus *Bifidobacterium* include lactic acid bacteria, acetic acid bacteria and *Bacillus subtilis.* As the bacterium other than *Bifidobacterium,* one, two or more species selected from the group consisting thereof can be used. Furthermore, as the probiotic, one or both of a lactic acid bacterium and a bacteria of the genus of *Bifidobacterium* are preferable. The probiotic may be any of living bacterial cells, dead bacterial cells, a culture containing living and dead bacterial cells and the like, but in view of the probiotic effect, living bacterial cells are preferable. By blending bacterial cells, a bacterial culture or fermented milk in the fermentation composition of the invention, a probiotic effect can also be expected.

Examples of the prebiotic include dietary fibers such as indigestible dextrin, insoluble oligosaccharides and polydextrose; proteins such as casein protein, soy protein, pea protein and mixtures thereof; decomposition products thereof; amino acids such as leucine, valine, isoleucine and glutamine; vitamins such as vitamin B6 and vitamin C, creatine, citric acid, fish oil; and oligosaccharides such as isomaltooligosaccharides, galactooligosaccharides, xylooligosaccharides, soybean oligosaccharides, fructooligosaccharides, lactulose and human milk oligosaccharides (HMOs). As the prebiotic, one, two or more kinds selected from the group consisting thereof can be used.

The prebiotic may be produced by a known production method, or a commercial product may be used.

Examples of the human milk oligosaccharides include neutral human milk oligosaccharides such as 2'-fucosyllactose, 3-fucosyllactose, 2',3-difucosyllactose, lacto-N-triose II, lacto-N-tetraose, lacto-N-neotetraose, lacto-N-fucopentaose I, lacto-N-neofucopentaose, lacto-N-fucopentaose II, lacto-N-fucopentaose III, lacto-N-fucopentaose V, lacto-N-neofucopentaose V, lacto-N-difucohexaose I, lacto-N-difucohexaose II, 6'-galactosyllactose, 3'-galactosyllactose, lacto-N-hexaose and lacto-N-neohexaose; and acidic human milk oligosaccharides such as 3'-sialyllactose, 6'-sialyllactose, 3-fucosyl-3'-sialyllactose and disialyl-lacto-N-tetraose. As the human milk oligosaccharide, one, two or more kinds selected from the group consisting thereof can be used.

As the dietary fibers, a carbohydrate which one or both of a bacteria of the genus *Bifidobacterium* and a lactic acid bacterium can assimilate is preferable. The dietary fibers are a carbohydrate derived from a plant and a carbohydrate derived from a bacterium. As the carbohydrate, one or both of a polysaccharide and an oligosaccharide (saccharide residue of around 2 to 9) are preferable. The dietary fibers are preferably water-soluble dietary fibers, and more specifically, one or both of a polysaccharide and an oligosaccharide which are soluble in water at around 4 to 30°C are more preferable. The dietary fibers are preferably resistant to a human enzyme.

More specific examples of the dietary fibers include oligosaccharides such as galactooligosaccharides, fructooligosaccharides, soybean oligosaccharides, xylooligosaccharides, isomaltooligosaccharides, raffinose, lactulose, coffee bean mannooligosaccharides and gluconic acid; and dietary fibers such as polydextrose, inulin, xylan, arabinan, pectin, galactan, cellulose, soybean fibers, dextrin and dextran. As the dietary fibers, one, two or more kinds selected from the group consisting thereof can be used.

The sweetener is not particularly limited, but examples of the sweetener include: saccharides such as high-fructose corn syrup (so-called glucose-fructose syrup), sugar (so-called sucrose), glucose, fructose, lactose, maltose, Palatinose, fructooligosaccharides, galactooligosaccharides and raffinose; sugar alcohols such as sorbitol, mannitol, maltitol, xylitol, erythritol and lactulose; natural sweeteners such as glycyrrhizin, stevioside, rebaudioside, a Chinese sweet tea extract and a hydrangea tea extract; artificial sweeteners such as saccharin, sucralose, acesulfame potassium and aster palm; and the like. One, two or more kinds selected from the group consisting thereof can be used. The sweetener can be used also as an assimilation component. When a low-calorie or non-caloric fermentation composition is to be obtained, a low-calorie or non-caloric sweetener such as the artificial sweeteners may be used.

In the invention, as the sweetener, for example, one, two or more kinds selected from the group consisting of lactose, high-fructose corn syrup, sucrose and the like are preferably used, and of these, lactose is more preferably contained.

The upper limit of the sweetener content of the fermentation composition of the invention, based on the total mass of the fermentation composition, is preferably 2 mass% or more, more preferably 4 mass% or more, further preferably 5 mass% or more. Moreover, the lower limit of the sweetener content of the fermentation composition of the invention, based on the total mass of the fermentation composition, is preferably 12 mass% or less, more preferably 10 mass% or less, more preferably 9 mass% or less. Furthermore, the range of the sweetener content of the fermentation composition of the invention is more preferably 4 to 10 mass%.

The stabilizer is not particularly limited, but examples of the stabilizer include high methoxyl pectins, sodium carboxymethyl cellulose, soybean polysaccharides and the like. One, two or more kinds selected from the group consisting thereof can be used.

The soybean polysaccharides are polysaccharides obtained from soybeans, and the main components are hemicelluloses. A commercial product may be used. Examples of the commercial product include high methoxyl pectin (SM-666, manufactured by San-Ei Gen F.F.I., Inc.), sodium carboxymethyl cellulose (Cellogen FZ (product name), manufactured by DKS Co. Ltd.), soybean polysaccharide (SM-1200, manufactured by San-Ei Gen F.F.I., Inc.) and the like, but the commercial product is not particularly limited thereto.

The amount of the stabilizer blended can be appropriately adjusted depending on the form of the drink and the kind of the stabilizer used. As a standard amount of the stabilizer blended, preferably around 0.05 to 0.5 mass%, more preferably around 0.1 to 0.3 mass%, based on the total mass of the fermentation composition, can be added in the produced fermentation composition.

The flavor component is not particularly limited, but a component which can be used for the purpose of adding a taste and a flavor to a drink can be used. Examples of the flavor component include coffee; teas such as black tea, green tea, *hojicha* (roasted green tea), *bancha* (coarse tea), *sencha* (green tea of middle grade), oolong tea and extracts thereof;, citrus fruits (lemon, orange and the like); fruit juices of apple, grape, strawberry, pineapple, banana, pear, peach, Japanese apricot, blueberry, melon, guava, mango, acerola, papaya and the like; vegetable juices of tomato, carrot and the like; powders thereof and flavors thereof. As the flavor component, one, two or more kinds selected from the group consisting thereof can be used.

The pH (20°C) of the fermentation composition of the invention is preferably 6 or less, more preferably 2 to 6, further preferably 3 to 5. The component used for adjusting the pH of the fermentation composition of the invention is not particularly limited, but an example thereof is a fruit derivative or a pH-adjusting agent.

The form of the fermentation composition of the invention may be any of liquid, semi-solid, solid and the like. Examples of the fermentation composition include yogurts, cheeses, creams, milk beverages, lactic acid bacteria beverages and supplements, but the fermentation composition is not limited thereto. The fermentation composition is more preferably a fermented food or drink, more preferably a fermented liquid food or a fermented drink. Examples of the fermented drink include yogurt drinks and lactic acid bacteria beverages, but the fermented drink is not limited thereto. The fermentation composition is more preferably an acidic food or drink or an acidic drink.

In general, the viable bacterial count and the viability of a bacterium decrease easily when the water content of a composition is high. According to the invention, however, even in a fermented liquid food or a fermented drink having a high water content, the viable bacterial count and the viability of the bacteria of the genus *Bifidobacterium* can be maintained high under cold storage from 0 day after the production to after around a month.

The fermentation composition of the invention is preferably a chilled food or drink. The "chilled" in the invention is to refrigerate at 10°C or lower (specifically 0 to 10°C). In the invention, a chilled stored fermented food or drink is more preferable.

Moreover, the fermentation composition of the invention is preferably a packed composition. The fermentation composition of the invention is more preferably packed in a container without sterilization.

### <1-5. Measurement Methods of Components of Invention>

Regarding the invention, the methods for measuring the components are as follows.

The fat is measured by the Roese-Gottlieb method.

The protein is measured by the Kjeldahl method.

The ash content is measured by the direct ashing method.

The water content is measured by the direct heat drying method.

The pH is the value at 20°C.

The metal component content is measured by inductively coupled plasma (ICP) optical emission spectrometry.

The organic acid content is measured by the LC/MS method using a column for organic acid analysis and a detector for organic acid analysis.

The phosphoric acid content is measured by high-performance liquid chromatography (HPLC) using a column for phosphoric acid analysis and a detector for the analysis.

The lactose and oligosaccharide content is measured by high-performance liquid chromatography (HPLC) using a column for lactose and oligosaccharide analysis and a detector for the analysis.

The free amino acid content is measured by high-performance liquid chromatography (HPLC) using a column for free amino acid analysis and a detector for the analysis.

The "milk solid content" in the invention is the total of the solids-not-fat and the milk fat. The content of the milk solids, the solids-not-fat, the milk fat and the other milk components in the invention are measured by the quantitative methods described in "Testing Methods of Compositional Standards of Milk, etc." of "Ministerial Ordinance Concerning Milk, etc. (Ministerial Ordinance Concerning Compositional Standards, etc. for Milk and Milk Products)".

In this regard, the "low-fat (or also called "low-milk fat")" in the invention has meanings including "zero fat (or also called "zero milk fat")". The "zero fat" has the same meanings as "less than 0.5 g fat per 100 g (mL) food" according to the nutrient labeling of the Food Labeling Act (Consumer Affairs Agency, [Food Labeling Standards, Attachment No. 13]).

### 2. Production Method of Fermentation Composition of Invention

### <2-1. Production Method of Fermentation Composition of Invention>

The fermentation composition of the invention can be obtained by a method for producing a fermentation composition containing at least (A) whey protein, (B) bacteria of the genus *Bifidobacterium* and (C) an ash content including a step of blending the (C) ash content.

The fermentation composition of the invention can be obtained by fermenting a composition containing at least (A) whey protein, (B) the bacteria of the genus *Bifidobacterium* and (C) an ash content.

Moreover, the fermentation composition of the invention can be produced according to a general process for producing a fermentation composition and is preferably obtained by blending the (C) ash content in any of the steps of the production process.

In the method for producing the fermentation composition of the invention, the components such as the (A) to (C) and the optional components in <1. Fermentation Composition> can be appropriately used as raw materials for the production method. The raw materials are used and blended in the respective component contents of the fermentation composition of the invention and at the respective blending ratios, and a raw material composition of the invention can be prepared.

The method for producing the fermentation composition of the invention suitably includes a preparation step of a raw material composition and a fermentation step, and the preparation step of a raw material composition and the fermentation step are more preferably conducted in this order. After the fermentation step, for example, a syrup addition step, a homogenization step and a container-packing step may be further conducted. In the invention, the preparation step, the fermentation step, the homogenization step and the container-packing step are preferably conducted in this order, and the syrup addition step may be conducted before the homogenization step. Moreover, in the invention, through the container-packing step, a packed fermentation composition is more preferably obtained.

In the method for producing the fermentation composition of the invention, the (A) whey protein is preferably blended in the step of preparing a raw material composition. As the raw material of the whey protein, a whey protein concentrate or whey protein is preferably used.

In the method for producing the fermentation composition of the invention, the (B) bacteria of the genus*Bifidobacterium* can be used as a fermentation bacterium and can be used as a fermentation starter. As fermentation bacteria, the bacteria of the genus *Bifidobacterium* and a lactic acid bacterium can also be used in combination. Using the bacteria of the genus *Bifidobacterium* and a lactic acid bacterium, a probiotic effect can also be expected.

In the method for producing the fermentation composition of the invention, the (B) bacteria of the genus *Bifidobacterium* is preferably blended in the raw material composition before fermentation. The (B) bacteria of the genus *Bifidobacterium* may be blended in one or both of the preparation step of a raw material composition and the fermentation step but is preferably blended in the fermentation step and used as a fermentation bacterium.

In the method for producing the fermentation composition of the invention, the (C) ash content is preferably adjusted at 0.05 mass% or more in the fermentation composition.

The timing of blending the (C) ash content is not particularly limited, and the (C) ash content may be blended according to the need in a step of the production process. The (C) ash content may also be blended in divided portions in more than one step.

The timing of blending the (C) ash content may be before or after the fermentation step. The component (C) ash content may be appropriately blended in a step after the fermentation step.

In the method for producing the fermentation composition of the invention, the (C) ash content may be blended in the raw material composition before fermentation and may be blended in the fermentation composition after fermentation. Moreover, the (C) ash content may be used after mixing with at least one of the (A) whey protein and the (B) bacteria of the genus *Bifidobacterium* and may be used after mixing with the both.

In the method for producing the fermentation composition of the invention, the (C) ash content is preferably blended in the preparation step of a raw material composition in view of suppressing a decrease in the viable bacterial count of the bacteria of the genus *Bifidobacterium,* improving the viability thereof and improving the growth rate thereof.

### <2-2. Preparation Step of Raw Material Composition>

The preparation step of a raw material composition of the invention is more specifically explained. Overlaps with <1. Fermentation Composition>, <2-1. Production Method of Fermentation Composition of Invention> and the like are appropriately omitted.

In the preparation step of the invention, for example, a raw material composition for fermentation can be obtained by blending the raw materials to obtain a raw material mixture and mixing the raw material mixture with water. The amount 100 mass% of the raw material composition is the total amount after adding water. As the raw material of whey protein, a whey protein concentrate is preferably used.

The optional component may be appropriately blended in the raw material composition within the range in which the fermentation and the viability of the bacteria of the genus *Bifidobacterium* are not impaired.

For fermentation, a milk raw material may be added to the raw material composition of the invention. In the milk raw material, in addition to the milk components, the optional component may be blended according to the need. The milk raw material may be subjected to sterilization, homogenization, cooling or the like according to general methods before fermentation.

### <2-3. Fermentation Step>

The fermentation step of the invention is more specifically explained. Overlaps with <1. Fermentation Composition>, <2-1. Production Method of Fermentation Composition of Invention>, <2-2. Preparation Step of Raw Material Composition> and the like are appropriately omitted.

One or both of the bacteria of the genus of *Bifidobacterium* and a lactic acid bacterium (more preferably a bacteria of the genus *Lactococcus*) are added to the raw material composition for fermentation of the invention and fermented. Before adding the fermentation bacterium, the raw material composition is preferably sterilized by heating.

The bacteria of the genus *Bifidobacterium* used for the fermentation of the invention is not particularly limited as long as the bacterium can be used as a fermentation bacterium, but the (B) bacteria of the genus *Bifidobacterium* in <1. Fermentation Composition> is suitably used. In particular, *Bifidobacterium* subsp. *longum* is preferable. *Bifidobacterium longum* subsp. *longum* NITE BP-02621 (ATCC BAA-999; BB536) is more preferable.

The lactic acid bacterium used for the fermentation of the invention is not particularly limited but is preferably bacteria of the genus *Lactococcus.* Examples of the bacteria of the genus *Lactococcus* include *Lactococcus lactis* (*L. lactis*)*, Lactococcus lactis* subspecies *lactis* (*L. lactis* subsp. *lactis)*, *Lactococcus lactis* subspecies *lactis biovaraety diacetylactis (L. lactis* subsp. *lactis biovar. diacetylactis)* and *Lactococcus lactis* subspecies *cremoris* (*L. lactis* subsp. *cremoris*) *.* As the bacteria of the genus *Lactococcus,* one, two or more species selected from the group consisting thereof are preferable. Of these, one or both of *L. lactis* and *L. lactis* subsp. *lactis* are preferable.

In the fermentation step of the invention, the bacteria of the genus *Bifidobacterium* and the bacteria of the genus *Lactococcus* are preferably added (inoculated) to the raw fermentation material composition at a bacterial count ratio (the ratio by colony forming unit (CFU)) of around bacteria of the genus *Bifidobacterium:* bacteria of the genus *Lactococcus* = 100:1 to 1:100 as a standard. The ratio is preferably 100:1 to 1:50. As a result, the fermentation of the bacteria advances with a good balance, resulting in improvement of the growth rate or the viability of the bacteria of the genus *Bifidobacterium.* Of the ratios, a ratio of 100:1 to 1:50 is preferable because a higher viable bacterial count and higher viability can be obtained.

The amounts of the bacteria added can be appropriately adjusted. For example, by adding the bacteria in amounts resulting in the total bacterial concentration of the bacteria in the raw fermentation material composition of at least around 1×10⁵ CFU/g, the bacteria of the genus *Bifidobacterium* can be grown sufficiently, and high viability can be maintained.

The method for adding the bacteria to the raw material composition of the invention is not particularly limited, and the bacteria can be added in the form of bacterial powder or added in the form of a culture.

When the bacteria are added in the form of bacterial powder, the bacteria are particularly preferably added to the raw material composition in a total amount which results in a concentration of at least around 1×10⁷ CFU/g.

The bacterial powder is a powder product obtained by growing a bacterium in an appropriate medium, isolating by centrifugation, then lyophilizing after mixing with a lyophilization protectant, crushing the dried product and then mixing with triturated powder according to the need. In the invention, bacterial powder having a bacterial concentration of 1×10¹¹ CFU/g or more is preferably used.

When the bacteria are added in the form of a culture, the bacteria are still further preferably added to the raw material composition in a total amount which results in a concentration of at least around 1×10⁵ CFU/g.

The culture is a liquid composition obtained by growing a bacterium in an appropriate medium. In the invention, a culture in which the bacteria have grown to from the late logarithmic growth phase to the stationary phase is preferably used for the purpose of promoting efficient growth of the bacteria thereafter. As a standard, a culture having a bacterial concentration of 1×10⁸ CFU/g or more is preferably used.

The culture temperature (fermentation temperature) is in the range in which the bacteria of the genus *Bifidobacterium* and the lactic acid bacterium (preferably a bacterium of *Lactococcus*) grow efficiently and is generally preferably around 30 to 50°C, more preferably around 35 to 39°C. The fermentation may be conducted until the bacteria of the genus *Bifidobacterium* and the lactic acid bacterium (preferably a bacterium of *Lactococcus*) grow sufficiently and may be generally conducted preferably until the pH of an aqueous solution of the raw material composition becomes 5.0 or less, more preferably until the pH of an aqueous solution of the raw material composition becomes 4.9 or less, further preferably until the pH becomes around 4.9 to 4.2. The fermentation period is preferably 5 to 20 hours, and a standard is around 8 to 14 hours at a culture temperature of around 35 to 39°C.

### <2-4. Other Steps>

In the invention, in addition to the steps explained above, a step which is generally conducted in the production of a fermentation composition of milk, skim milk or the like (preferably a fermented drink) can be appropriately conducted in the range in which the viable bacterial count of the bacteria of the genus *Bifidobacterium* and the viability are not impaired. For example, as the preparation step of a raw material composition, a sterilization step of the raw material composition, a cooling step, an addition step of an optional component, a homogenization step or the like may be conducted. Moreover, after the fermentation step, it is preferable that a sterilization step such as heat sterilization and membrane decontamination is not conducted so that the viability of the bacteria of the genus *Bifidobacterium* is not impaired.

The homogenization step conducted in the invention can be conducted by a general method. An example is a homogenization method using a homogenizer under the conditions of 65 to 80°C at a pressure of 5 to 25 MPa, but the step is not limited thereto.

The heat sterilization step conducted in the invention can be conducted by heat sterilization by a general method, and the heat sterilization step may be a decontamination step using a membrane or the like. The heat sterilization is generally at 120 to 150°C for 1 to 120 seconds, more preferably at 120 to 140°C for around 1 to 3 seconds in view of the drink flavor, and UHT pasteurization (Ultra-High Temperature pasteurization) may be conducted.

In the invention, a stabilizer is preferably added to improve the storage stability of the fermentation composition produced. The timing of adding the stabilizer may be before or after the fermentation step, but the stabilizer is preferably added to the raw material composition in view of the working property. For example, the stabilizer may be dissolved in water with the saccharide when the saccharide is added and added in the form of an aqueous solution.

The fermentation composition (preferably a fermented drink) produced as described above is packed in a container of a volume of around 80 to 500 mL, preferably a volume of around 80 to 250 mL, and sealed. The packed product is stored generally at 10°C or lower, preferably at 5°C or lower. As a result, the viable bacterial count of the probiotic and the viability are easily maintained.

The container is preferably with low oxygen permeability and is particularly preferably made of glass or plastic (for example, made of polypropylene, polyethylene terephthalate (PET), polystyrene or polyethylene).

A packed product can be easily stored stably for a long period because low-temperature storage such as cold and frozen storage is easy. Moreover, even when the fermentation composition of the invention has a high water content as liquid or semi-liquid, decreases in the viable bacterial count of the bacteria of the genus *Bifidobacterium* and the viability can also be suppressed for a longer period.

In the invention, bacterial powder may be obtained through a step of drying the fermentation composition after homogenization, and the bacterial powder may further be packed in a packaging container. The drying method is not particularly limited, and examples thereof include a lyophilization method and a spray-dying method.

### 3. Uses of Invention (Food, Drink and the Like)

The invention uses the (C) ash content and thus can suppress a decrease in the viable bacterial count of the bacteria of the genus *Bifidobacterium* in the fermentation composition and can improve the viability.

The (C) ash content in the fermentation composition of the invention can be contained as an active ingredient of an agent for improving the viability of the (B) bacteria of the genus *Bifidobacterium.* The alkali metal can also suppress a decrease in the viable bacterial count of the (B) bacteria of the genus *Bifidobacterium* and can improve the viability and thus can be contained as an active ingredient of an agent for improving the viability of the bacteria of the genus *Bifidobacterium* as the (C) ash content. In particular, the (C) ash content in the fermentation composition of the invention is preferably used as an agent for improving the viability of the (B) bacteria of the genus *Bifidobacterium* in the fermentation composition containing the (A) whey protein.

One or both of the (C) ash content and the alkali metal in the fermentation composition of the invention can be used for the manufacture of an agent for improving the viability of the bacteria of the genus *Bifidobacterium.* The invention can also provide the (C) ash content and/or the alkali metal for suppressing a decrease in the viable bacterial count of the (B) bacteria of the genus *Bifidobacterium* in the fermentation composition containing the (A) whey protein and for improving the viability, and the invention can also provide use thereof. Moreover, by blending the (C) ash content and/or the alkali metal, the invention can also provide a method for suppressing a decrease in the viable bacterial count of the (B) bacteria of the genus *Bifidobacterium,* a method for improving the viable bacterial count and/or the viability thereof and the like.

Regarding the components (A) to (C) and the optional components of the invention, the amounts thereof, the content ratios thereof and the like in the uses of the invention, features which are common to those of <1. Fermentation Composition> and <2. Production Method of Fermentation Composition> are appropriately omitted from the explanation.

In the uses of the invention, the metal component contents or the used amounts thereof can also be adjusted according to the need by adding the alkali metal to the (C) ash content or adding the (C) ash content to the alkali metal, and the ash content or the alkali metal can also be used alone instead of using the both in combination.

The fermentation composition of the invention can also be used for a wide range of uses such as for a pharmaceutical product, for a food or a drink (for example, a drink and foods with function claims) and for feed (for example, pet food) and can be used as a pharmaceutical product, a food, a drink or the like. The form of the invention can be the form of liquid or fluid or the like, and the invention can be applied in a wide range of forms.

The invention may be used for human as the subject of application or an animal other than human, such as pets and livestock. The use may be for therapeutic purpose or for non-therapeutic purpose. The "non-therapeutic purpose" is a concept which does not include medical practice, namely treatment of a human body by therapy.

### [1] Pharmaceutical Product

The pharmaceutical product can suppress a decrease in the viable bacterial count of the bacteria of the genus *Bifidobacterium* and has further excellently improved viability and thus has efficacies such as probiotic effects, and beneficial probiotic effects on human health, such as intestinal regulation effect, mineral absorption-promoting effect and an effect of preventing/improving inflammatory bowel diseases, are expected.

### [2] Food or Drink

The food or the drink is not limited regarding the form such as liquid, paste, solid and powder, and examples thereof include, in addition to tablet candies, liquid foods, feed (containing food for pets) and the like, wheat products, instant foods, processed agricultural products, processed fishery products, processed livestock products, milk/dairy products, oils and fats, basic condiments, compound flavor enhancers/foods, frozen foods, confectioneries, drinks, other commercial products and the like.

Examples of the milk/dairy products include processed milk, milk beverages, yogurts, lactic acid bacteria beverages, cheeses, ice creams, powdered formulas, creams, other dairy products and the like.

Examples of the drinks include fermented drinks, carbonated drinks, natural juices, fruit juices, fruit juice-containing soft drinks, fruit flesh drinks, fruit granule-containing fruit juices, vegetable drinks, soy milk, soy milk drinks, coffee drinks, tea drinks, drink powders, concentrated drinks, sport drinks, nutritional drinks, alcohols, other luxury beverages and the like.

The food or the drink defined in the invention can also be provided or sold as a food or a drink with a label with a health use.

The "labeling" act includes all the acts for informing a consumer of the use, and all the expressions which can remind of/cause to guess the use are the "labeling" acts of the invention, regardless of the purposes of labeling, the contents of labeling, the objects to be labeled, the media and the like.

The "label" is preferably with an expression which allows a consumer to directly recognize the use. Specific examples include an act of transferring an article in which the use is described on a product regarding the food or the drink or packaging of a product, delivering such an article, displaying such an article for transfer or delivery or importing such an article, an act of displaying or distributing an advertisement of a product, a price list or a business document with a description of the use thereon or providing information with such contents with a description of the use by an electromagnetic method (internet or the like) and another act.

The content of the label is preferably a label approved by the administration or the like (for example, a label approved based on a system provided by the administration and provided in the form based on the approval). It is preferable to label with such a content on packaging, a container, a catalogue, a brochure, an advertisement material in a sales site such as POP, other documents or the like.

The "labels" also include labels with health foods, functional foods, enteral nutrition products, food for special dietary uses, food with health claims, foods for specified health uses, foods with nutrient function claims, foods with function claims, quasi-drugs and the like. In particular, the labels are labels approved by the Consumer Affairs Agency, such as labels approved by the systems for foods for specified health uses or similar systems thereof and the like. Examples of the latter include a label with foods for specified health uses, a label with qualified foods for specified health uses, a label indicating influence on the structure and/or the function of a body, a label with reduction of disease risk and the like. More specifically, labels with food for specified health uses (especially labels with health uses) provided by the Regulations for Enforcement of the Health Promotion Act (Order of the Ministry of Health, Labour and Welfare of Japan, No. 86, April 30, 2003) and similar labels are typical examples.

The invention can also employ the following constitutions.
[1] A fermentation composition containing a component (A) whey protein, a component (B) bacteria of the genus *Bifidobacterium* and a component (C) ash content.
[2] A fermentation composition obtained by mixing a component (A) whey protein, a component (B) bacteria of the genus *Bifidobacterium* and a component (C) ash content.
[3] A method for producing a fermentation composition containing a component (A) whey protein, a component (B) bacteria of the genus *Bifidobacterium* and a component (C) ash content including a step of blending the component (C).
[4] A viability-improving agent or a viability-improving method for improving the viability of bacteria of the genus *Bifidobacterium* contained in a fermentation composition containing whey protein and the bacteria of the genus *Bifidobacterium* in which an ash content is contained as an active ingredient.
   Use of an ash content for the manufacture of a viability-improving agent of bacteria of the genus *Bifidobacterium.*
[5] In any of [1] to [4] above, the amount of the (C) ash content is preferably 0.05 mass% or more.
[6] In any of [1] to [5] above, the (C) ash content is preferably an ash content containing at least an alkali metal.
[7] In any of [1] to [6] above, the sodium and potassium content of 100 g of the fermentation composition is preferably 15 mg or more.
[8] In any of [1] to [7] above, the amount of the (A) whey protein in the fermentation composition is preferably 1 mass% or more.
[9] In any of [1] to [8] above, a whey protein concentrate and/or a whey protein isolate are preferably contained.
[10] In any of [1] to [9] above, the solid concentration of the fermentation composition is preferably less than 11 mass%.
[11] In any of [1] to [10] above, the viable bacterial count of the (B) bacteria of the genus *Bifidobacterium* in the fermentation composition is preferably 1×10⁶ CFU/g or more.
[12] In any of [1] to [11] above, the fermentation composition is preferably a chilled food or drink.

### Examples

The invention is explained in further detail below based on Examples and the like. In this regard, the Examples and the like explained below show examples of typical Examples and the like of the invention, and the scope of the invention is not construed as being narrower due to the Examples and the like.

In the Examples below, the components were measured according to the measurement methods of the invention described above.

### <Influence on Viability of Bacteria of Genus Bifidobacterium>

The results of experiment examining how the compositions and the production conditions in the Test Examples would affect the viability of bacteria of the genus *Bifidobacterium* are shown below. In the Test Examples, the viable bacterial counts of the bacteria of the genus *Bifidobacterium* were measured by the following method.

### (Measurement Method of Viable Bacterial Count)

A sample (fermented product) in an amount of 1 g was dissolved/suspended in 9 mL of 0.85% sterile saline solution, and after stepwise dilution of the suspension, the resultants were cultured anaerobically using TOS medium (trans-oligosaccharide propionate agar medium, manufactured by Yakult Pharmaceutical Industry Co., Ltd.) at 37°C for 72 hours. The colony numbers were then counted.

### [Test Example 1]

A mixture obtained by mixing a whey protein concentrate (Milei80, whey protein content of 80 mass%; manufactured by MILEI GmbH), lactose (manufactured by Milei) and a raw ash content material was dissolved in water at a concentration of 10%, and a raw material composition was thus obtained. Twenty kinds of raw material composition of Reference Example 1 and Examples 1 to 19 were prepared as shown in Table 1 using sodium chloride (NaCl, manufactured by Sigma-Aldrich) or potassium chloride (KCl, manufactured by Sigma-Aldrich) as the raw ash content material adjusted at the blending ratios.

The obtained raw material compositions all had a solid concentration of 9.5 mass% and a whey protein content of 1.25 mass%, and the whey protein/milk fat was 15.6.

The raw material compositions were sterilized by heating at 90°C for 10 minutes and cooled to 40°C after the heat sterilization.

A fermentation bacterium starter was added to each heat-sterilized raw material composition to a concentration of 0.01 mass%. As the fermentation bacterium starter, powder of bacteria of the genus *Bifidobacterium* (*B. longum* subsp. *longum,* BB536 manufactured by Morinaga Milk Industry Co., Ltd.) and powder of a lactic acid bacterium (*L*. *lactis* subsp. *Lactis: Lactococcus lactis* subspecies *lactis* FERM BP-10757, manufactured by Morinaga Milk Industry Co., Ltd.) which were prepared at a blending ratio of 9:1 were used. After adding the starter and mixing, 180 mL of the mixture solution was packed in a 200-mL glass bottle (duran bottle) container with a cap, sealed and then maintained at 38°C, and fermentation was conducted until the pH became 4.8.

After the fermentation, the resultant was cooled to 10°C or lower, and a fermentation composition obtained by fermenting the raw material composition was thus produced.

The viable bacterial count of the bacteria of the genus *Bifidobacterium* and the viable bacterial count of the lactic acid bacterium of each fermentation composition soon after the fermentation (soon after stopping the fermentation by cooling, the same applies below) as the initial bacterial counts and the viable bacterial counts of the bacteria of the genus *Bifidobacterium* and the lactic acid bacterium and the pH after storing the fermentation composition at 10°C for one to three weeks were measured. The results are as shown in Table 2.

**[Table 1]**

| | Fermentation Composition | Reference Example 1 | Example 1 | Example 2 | Example 3 | Example 4 | Example 5 | Example 6 | Example 7 | Example 8 | Example 9 |
|---|---|---|---|---|---|---|---|---|---|---|---|
| | Raw Ash Content Material | None | NaCl | NaCl | NaCl | NaCl | NaCl | NaCl | NaCl | NaCl | NaCl |
| Raw Material Composition (mass%) | Whey Protein | 1.25 | 1.25 | 1.25 | 1.25 | 1.25 | 1.25 | 1.25 | 1.25 | 1.25 | 1.25 |
| | Lactose | 8.09 | 8.09 | 8.09 | 8.09 | 8.09 | 8.09 | 8.09 | 8.09 | 8.09 | 8.09 |
| | Ash Content | 0.046 | 0.057 | 0.081 | 0.106 | 0.122 | 0.134 | 0.162 | 0.220 | 0.282 | 0.312 |
| | Milk Fat | 0.08 | 0.08 | 0.08 | 0.08 | 0.08 | 0.08 | 0.08 | 0.08 | 0.08 | 0.08 |
| (Metal/ Raw Material Composition 100 g) | Na (mg) | 3.6 | 15.0 | 38.8 | 63.7 | 79.8 | 91.5 | 120.0 | 180.0 | 240.0 | 270.0 |
| | K (mg) | 10.7 | 10.7 | 10.7 | 10.7 | 10.7 | 10.7 | 10.7 | 10.7 | 10.7 | 10.7 |
| | Na+K in Total (mg) | 14 | 26 | 49 | 74 | 90 | 102 | 131 | 191 | 251 | 281 |
| | K/Na Ratio | 3.0 | 0.71 | 0.28 | 0.17 | 0.13 | 0.12 | 0.09 | 0.06 | 0.04 | 0.04 |
| Component Ratio | Ash Content /Whey Protein | 0.04 | 0.05 | 0.06 | 0.08 | 0.10 | 0.11 | 0.13 | 0.18 | 0.23 | 0.25 |
| | Na+K in Total /Whey Protein | 0.01 | 0.02 | 0.04 | 0.06 | 0.07 | 0.08 | 0.10 | 0.15 | 0.20 | 0.22 |
| Viability (%) of B Bacterium 3 Weeks after Fermentation | | 0.01 | 21.9 | 27.4 | 30.9 | 40.0 | 36.2 | 34.4 | 29.7 | 17.1 | 12.3 |

**[Table 1 (continued)]**

| | Fermentation Composition | Example 10 | Example 11 | Example 12 | Example 13 | Example 14 | Example 15 | Example 16 | Example 17 | Example 18 | Example 19 |
|---|---|---|---|---|---|---|---|---|---|---|---|
| | Raw Ash Content Material | KCl | KCl | KCl | KCl | KCl | KCl | KCl | KCl | KCl | KCl |
| Raw Material Composition (mass%) | Whey Protein | 1.25 | 1.25 | 1.25 | 1.25 | 1.25 | 1.25 | 1.25 | 1.25 | 1.25 | 1.25 |
| | Lactose | 8.09 | 8.09 | 8.09 | 8.09 | 8.09 | 8.09 | 8.09 | 8.09 | 8.09 | 8.09 |
| | Ash Content | 0.085 | 0.115 | 0.135 | 0.155 | 0.196 | 0.242 | 0.272 | 0.335 | 0.365 | 0.395 |
| | Milk Fat | 0.08 | 0.08 | 0.08 | 0.08 | 0.08 | 0.08 | 0.08 | 0.08 | 0.08 | 0.08 |
| (Metal/ Raw Material Composition 100 g) | Na (mg) | 3.6 | 3.6 | 3.6 | 3.6 | 3.6 | 3.6 | 3.6 | 3.6 | 3.6 | 3.6 |
| | K (mg) | 50.0 | 80.0 | 100.0 | 120.0 | 161.0 | 206.8 | 236.7 | 300.0 | 330.0 | 360.0 |
| | Na+K in Total (mg) | 54 | 84 | 104 | 124 | 165 | 210 | 240 | 304 | 334 | 364 |
| | K/Na Ratio | 13.9 | 22.3 | 27.8 | 33.4 | 44.8 | 57.6 | 65.9 | 83.5 | 91.9 | 100.3 |
| Component Ratio | Ash Content /Whey Protein | 0.07 | 0.09 | 0.11 | 0.12 | 0.16 | 0.19 | 0.22 | 0.27 | 0.29 | 0.32 |
| | Na+K in Total /Whey Protein | 0.04 | 0.07 | 0.08 | 0.10 | 0.13 | 0.17 | 0.19 | 0.24 | 0.27 | 0.29 |
| Viability (%) of B Bacterium 3 Weeks after Fermentation | | 31.0 | 51.6 | 30.4 | 28.6 | 38.7 | 28.5 | 30.1 | 21.6 | 16.0 | 22.9 |

The viability (%) is {viable bacterial count (CFU/g) after storage/initial bacterial count (CFU/g) soon after production}×100.

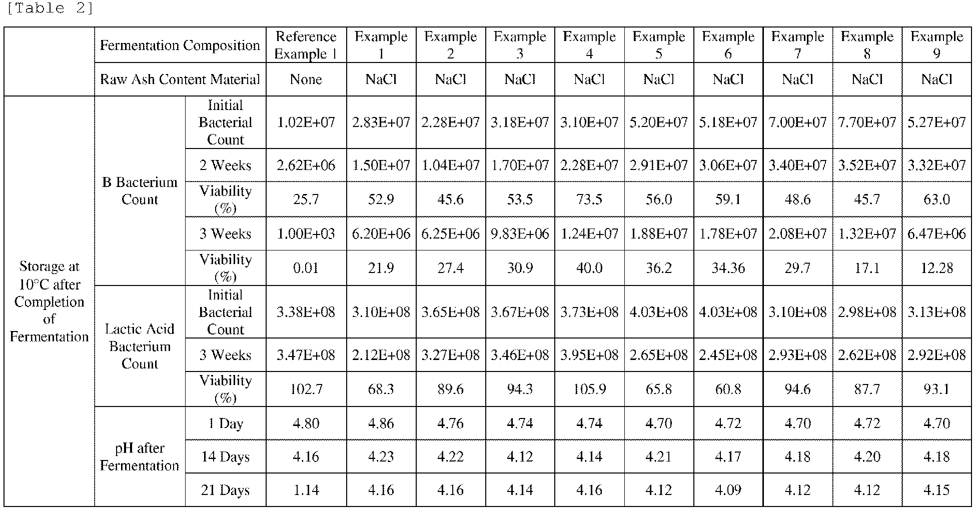

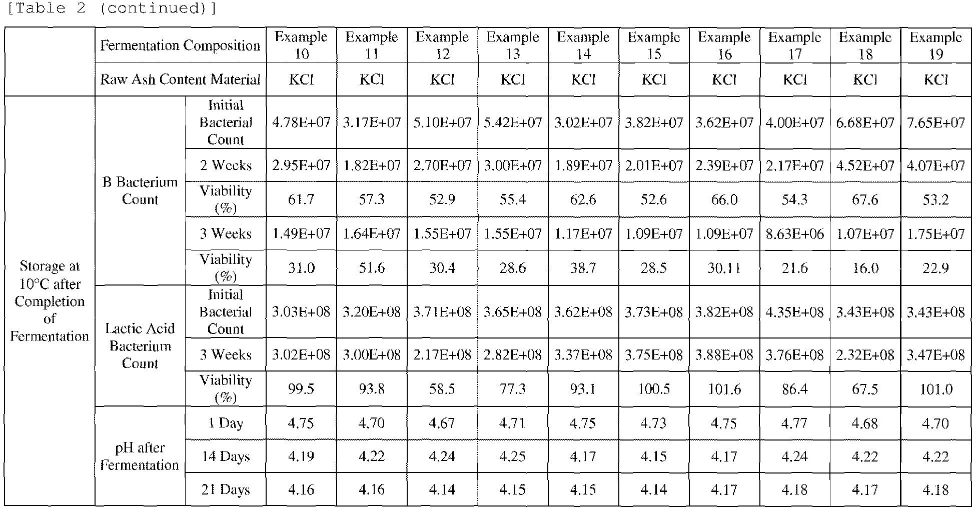

E+06, E+07 and E+08 in the table mean ×10⁶, ×10⁷ and ×10⁸, respectively, which are viable bacterial counts (CFU/g). The viability (%) is {viable bacterial count (CFU/g) after storage/initial bacterial count (CFU/g) soon after production}×100.

As shown in Table 2, when the total of the sodium content and the potassium content (Na+K in total) was 15 mg/100 g or more, the viable bacterial count and the viability of the bacteria of the genus *Bifidobacterium* improved as compared to those of Reference Example 1. Moreover, it was observed as follows: the viability of the bacteria of the genus *Bifidobacterium* three weeks after the fermentation exceeded 25% when the Na+K in total was 49 to 240 mg/100 g; the viable bacterial count thereof was 40% or more when the Na+K in total was 84 to 90 mg/100 g; and the viable bacterial count thereof exceeded 50% in the case of 84 mg/100 g. In this manner, by blending an ash content (more preferably an alkali metal) in the composition, an effect of improving the viable bacterial count of the bacteria of the genus *Bifidobacterium,* an effect of suppressing a decrease in the viable bacterial count thereof and an effect of improving the viability thereof were observed.

### [Test Example 2]

Fermentation compositions were prepared by the same method as that in Test Example 1 except that the ash content was changed, and the viability of the bacteria after the fermentation was measured.

Example 20, in which the ash content was changed to a mixture of sodium chloride and potassium chloride, and Example 21, in which the ash content was changed to whey minerals (manufactured by Bayerische Milchindustrie), were prepared as shown in Table 3, and the viability thereof was as shown in Table 4.

**[Table 3]**

| | Fermentation Composition | Example 20 | Example 21 |
|---|---|---|---|
| | Raw Ash Content Material | NaCl + KCl | Whey Minerals |
| Raw Material Composition (mass%) | Whey Protein | 1.25 | 1.26 |
| | Lactose | 8.09 | 7.42 |
| | Ash Content | 0.283 | 0.80 |
| | Milk Fat | 0.08 | 0.08 |
| (Metal/ Raw Material Composition 100 g) | Na (mg) | 79.8 | 91.5 |
| | K (mg) | 161.0 | 236.7 |
| | Na+K in Total (mg) | 241 | 328 |
| | K/Na Ratio | 2.0 | 2.6 |
| Component Ratio | Ash Content /Whey Protein | 0.23 | 0.64 |
| | Na+K in Total /Whey Protein | 0.19 | 0.26 |
| Viability (%) of B Bacterium 3 Weeks after Fermentation | | 32.5 | 16.5 |

The viability (%) is {viable bacterial count (CFU/g) after storage/initial bacterial count (CFU/g) soon after production}×100.

**[Table 4]**

| | Fermentation Composition | | Example 20 | Example 21 |
|---|---|---|---|---|
| | Raw Ash Content Material | | NaCl + KCl | Whey Minerals |
| Storage at 10°C after Completion of Fermentation | B Bacterium Count | Initial Bacterial Count | 6.33E+07 | 1.66E+08 |
| | | 2 Weeks | 4.42E+07 | 7.90E+07 |
| | | Viability (%) | 69.7 | 47.6 |
| | | 3 Weeks | 2.06E+07 | 2.74E+07 |
| | | Viability (%) | 32.5 | 16.5 |
| | Lactic Acid Bacterium Count | Initial Bacterial Count | 3.38E+08 | 2.24E+08 |
| | | 3 Weeks | 2.63E+08 | 2.49E+08 |
| | | Viability (%) | 78 | 111.2 |
| | pH after Fermentation | 1 Day | 4.69 | 4.80 |
| | | 14 Days | 4.20 | 4.59 |
| | | 21 Days | 4.16 | 4.56 |

E+06, E+07 and E+08 in the table mean ×10⁶, ×10⁷ and ×10⁸, respectively, which are viable bacterial counts (CFU/g). The viability (%) is {viable bacterial count (CFU/g) after storage/initial bacterial count (CFU/g) soon after production}×100.

As shown in Table 4, even when the raw ash content material was replaced with a mixed system of sodium chloride and potassium chloride or whey minerals, an effect of improving the viable bacterial count of the bacteria of the genus *Bifidobacterium,* an effect of suppressing a decrease in the viable bacterial count thereof and an effect of improving the viability thereof were observed.

## Claims

1. A fermentation composition containing the components (A) to (C) below,
(A) whey protein,
(B) bacteria of the genus *Bifidobacterium* and
(C) 0.05 mass% or more of an ash content.

2. The fermentation composition according to claim 1, wherein the (C) ash content is an ash content containing at least an alkali metal.

3. The fermentation composition according to claim 1 or 2, wherein the sodium and potassium content of 100 g of the fermentation composition is 15 mg or more.

4. The fermentation composition according to any one of claims 1 to 3, wherein the amount of the (A) whey protein is 1 mass% or more based on the total mass of the fermentation composition.

5. The fermentation composition according to any one of claims 1 to 4 which contains one or both of a whey protein concentrate and a whey protein isolate.

6. The fermentation composition according to any one of claims 1 to 5, wherein the solid concentration of the fermentation composition is less than 11 mass% based on the total mass of the fermentation composition.

7. The fermentation composition according to any one of claims 1 to 6, wherein the viable bacterial count of the (B) bacteria of the genus *Bifidobacterium* is 1×10⁶ CFU/g or more.

8. The fermentation composition according to any one of claims 1 to 6, wherein the fermentation composition is a chilled food or drink.

9. A method for producing a fermentation composition containing the components (A) to (C) below including a step of blending the component (C) ash content,
(A) whey protein,
(B) a bacteria of the genus *Bifidobacterium* and
(C) an ash content.

10. A viability-improving agent for improving the viability of a bacteria of the genus *Bifidobacterium* contained in a fermentation composition containing whey protein and the bacteria of the genus *Bifidobacterium*
which contains an ash content as an active ingredient.
